# EUROPEAN PATENT APPLICATION

(11) **EP 3 007 520 A1**
(43) Date of publication of application: **13.04.2016**
(21) Application number: 14804741.8
(22) Date of filing: 27.05.2014
(51) Int. Cl.: H05B 37/02

(54) **DEVICE FOR CONTROLLING BRIGHTNESS OF LIGHTING DEVICE**

(30) Priority: 30.05.2013 KR 20130061826
(71) Applicant: KMW Inc., Gyeonggi-do 445-813 (KR)
(72) Inventor: KIM, Geun-Young, Gyeonggi-do, 445-813 (KR)
(74) Representative: Scheele, Friedrich
(86) International application number: PCT/KR2014/004701
(87) International publication number: WO 2014/193135

(57) **Abstract**

The present invention relates to a device for controlling the brightness of a lighting device, comprising: a camera module for photographing a lighting area of the lighting device comprising a plurality of streetlights; a brightness controller for calculating an average brightness of the lighting area by receiving a photographed image of the camera module, and for comparing the average brightness with a reference brightness and transmitting a brightness control signal according to the comparison result; and a streetlight device unit provided in each of the streetlights of the lighting device so as to adjust the brightness of an LED light source unit according to the brightness control signal of the brightness controller. According to the present invention, an average brightness of an area illuminated by a lighting device which is a set of a plurality of streetlights can be calculated by processing an image from a camera obtained by photographing the area, and the brightness of the lighting device can be controlled according to the average brightness, thereby solving existing problems of brightness control according to a difference between the brightness at a sensor location and the average brightness of the lighting device.

## Description

### Detailed Description of the Invention

### Technical Field

The present invention relates to a brightness control device of a lighting apparatus, particularly, to automatically controlling a brightness in consideration of an ambient brightness, and more particularly, to a brightness control device of a lighting apparatus for sensing an outside brightness and automatically controlling a brightness of a tunnel lighting.

### Background Art

Since Light Emitting Diodes (LEDs) have advantages of a long life cycle and low consumption power compared to other typical lights, lately, products that can substitute typical lights for streetlights, indoor lights, etc. are being developed. A LED streetlight has a great advantage of low consumption power compared to typical streetlights, however, it also has a problem of unnecessary power consumption when it emits light with a constant brightness regardless of an ambient brightness.

In order to overcome the problem, a technique for controlling the illuminance of a LED streetlight according to ambient illuminance has been developed, as seen in Korean Laid-open Patent Application No. 10-2013-0024433 (laid-open on March 8, 2013, entitled "LED streetlight for automatically controlling illuminance" ).

However, when an illuminance sensor for detecting an ambient brightness is attached on each LED streetlight, the illuminance sensor needs to be exposed to the outside of the LED streetlight, which makes product design difficult and increases cost of production.

The illluminance sensor detects ambient illuminance at the upper part of the streetlight, not the illuminance of an area at which the streetlight actually irradiates light, so that the streetlight is controlled to have illuminance set according to the detected ambient illuminance.

That is, the area at which the streetlight irradiates light is a road, but the illuminance sensor is generally installed at the upper part of the streetlight. Also, since the illuminance sensor is influenced by light reflected from a road or by light irradiated from other streetlights installed around nearby buildings or roads, illuminance detected by the illuminance sensor cannot be considered as the illuminance of the area at which the streetlight irradiates light. Accordingly, an effort for solving the problem is needed.

Also, when a driver enters a tunnel in a day of strong sunlight, blackout in vision occurs so that the driver's view suddenly becomes blurred. Accordingly, it is also necessary to control a brightness of a tunnel lighting according to an outside brightness.

### Disclosure

### Technical Problem

In order to overcome the above-described problems, an aspect of the present invention provides a brightness control device of a lighting apparatus, wherein the brightness control device can detect an ambient brightness and control the lighting apparatus according to the average of the ambient brightness.

Particularly, there is provided a device for detecting a brightness outside a tunnel, and controlling a brightness in the tunnel according to the detected brightness.

Another aspect of the present invention provides a brightness detection device of a lighting apparatus, wherein the brightness detection device can detect a brightness of an area at which the lighting apparatus irradiates light, through a device already installed on a road, without adding another device, thereby ensuring generality while reducing cost.

### Technical Solution

In accordance with an aspect of exemplary embodiments of the present invention, there is provided a brightness control device of a lighting apparatus including: a camera module configured to acquire an image for brightness control; a brightness controller configured to receive an image photographed by the camera module to calculate an average brightness of a photographed area, to compare the average brightness to a reference brightness, and to transmit a brightness control signal according to the result of the comparison; and a lighting device unit installed in the lighting apparatus, and configured to adjust a brightness of a LED light source unit according to the brightness control signal from the brightness controller.

### Advantageous Effects

The brightness control device of the lighting apparatus may process an image of the surrounding area of the lighting apparatus, the image photographed by a camera, to calculate an average brightness of the area, and control a brightness of the lighting apparatus according to the average brightness, thereby overcoming difficulties in brightness control due to a difference between the brightness at a sensor location and the average brightness of the lighting apparatus.

Also, since a brightness can be detected through a security camera, a speed camera, or a lane violation enforcement camera already installed on roads, it is unnecessary to replace an existing streetlight with a new streetlight with a sensor, resulting in ensuring generality and reducing cost.

### BRIEF DESCRIPTION OF THE DRAWINGS

FIG. 1 is a block diagram illustrating a brightness control device of a lighting apparatus according to a preferred embodiment of the present invention; and
FIG. 2 is a flowchart illustrating a brightness control method of a lighting apparatus according to a preferred embodiment of the present invention.

### Best Mode

Hereinafter, a brightness control device and a brightness control method of a lighting apparatus according to the present invention will be described in detail with reference to the appended drawings.

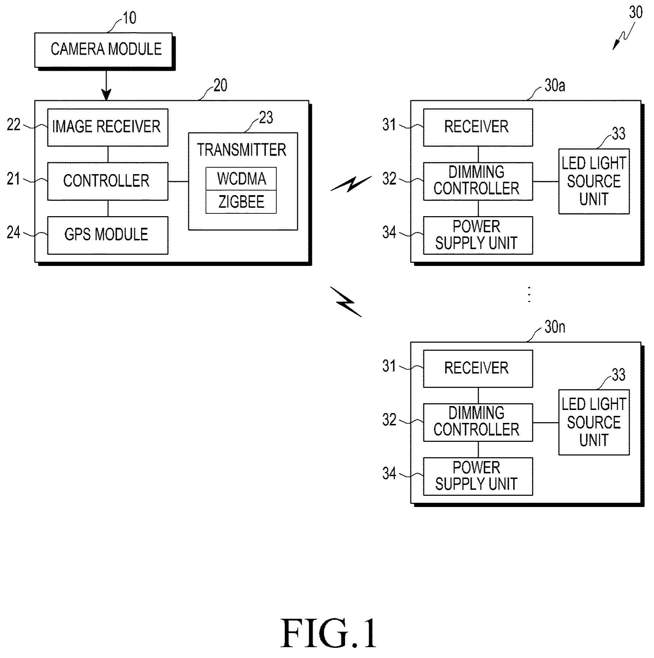

FIG. 1 is a block diagram illustrating a brightness control device of a lighting apparatus according to an embodiment of the present invention.

Referring to FIG. 1, a brightness control device of a lighting apparatus 30 according to a preferred embodiment of the present invention may include a camera module 10 to photograph an image of a set area around the lighting apparatus 30, and a brightness controller 20 to receive the image photographed by the camera module 10, to create a High Dynamic Range (HDR) image, to calculate an average brightness, then to compare the average brightness to a reference brightness, and to transmit a brightness control signal to one or more streetlight device units 30a to 30n included in the lighting apparatus 30.

Hereinafter, the configuration and functions of the brightness control device of the lighting apparatus 30 according to the preferred embodiment of the present invention configured as described above will be described in detail together with a brightness control method.

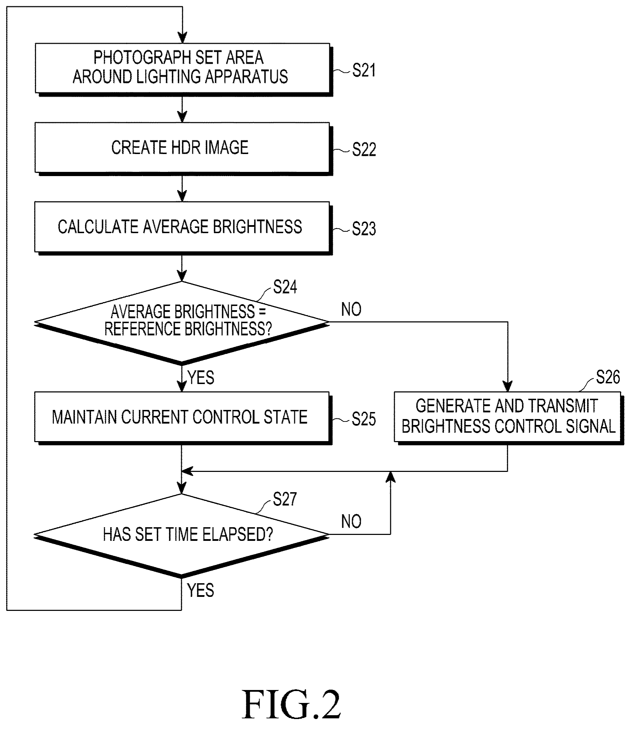

FIG. 2 is a flowchart illustrating a brightness control method of a lighting apparatus according to a preferred embodiment of the present invention, and hereinafter, the present invention will be described in detail with reference to FIGS. 1 and 2.

First, in operation S21, a set area around the lighting apparatus 30 may be photographed by the camera module 10. The camera module 10, which can photograph digital images, may photograph the set area around the lighting apparatus 30. A location at which the camera module 10 is installed is not limited. The camera module 10 may be installed at a set area outside a tunnel, or at an area at which a streetlight irradiates light.

The camera module 10 may be installed separately, or may be implemented using any one of cameras installed on roads for various purposes.

On roads, cameras for various purposes, such as a security camera, a speed camera, a bus-only lane violation enforcement camera, a changeable lane violation enforcement camera, and a traffic information collecting camera, are installed at various places. If one of the cameras is used as the camera module 10 according to the present invention, initial installation cost can be minimized.

The camera module 10 may photograph images at regular time intervals, and transmit the images to the brightness controller 20. If the camera module 10 photographs moving images, the camera module 10 may extract an image of a frame, and transmit the extracted image, periodically.

Then, in operation S22, the brightness controller 20 may create the image of the area illuminated by the lighting apparatus 30, the image received from the camera module 10, as a High Dynamic Range (HDR) image, and calculate an average brightness of the image, in operation S23.

The brightness controller 20 may include an image receiver 22 to receive image signals from the camera module 10, a controller 21 to process an image received through the image receiver 22 to detect an average brightness, to compare the average brightness to a reference brightness, and to output a brightness control signal according to a difference between the average brightness and the reference brightness, and a transmitter 23 to transmit the brightness control signal from the controller 21 to the streetlight device units 30a to 30n included in the lighting apparatus 30.

The transmitter 23 may include a WCDMA module for communicating with a central control system (not shown), and transmit a control signal for controlling a brightness to the streetlight device units 30a to 30n through short-range wireless communication or wired communication.

The short-range wireless communication may be Zigbee.

Also, the brightness controller 20 may further include a GPS module 24 so that the brightness controller 20 can be controlled by the central control system according to its installation position. The central control system may be not directly involved in substantially controlling a brightness, and may check the states of the brightness controller 20 and the lighting apparatus 30 to maintain and repair the brightness controller 20 and the lighting apparatus 30.

The image of the area illuminated by the lighting apparatus 30, the image photographed by the camera module 10, may be received by the image receiver 22 through RS-232 or Ethernet communication. The image received by the image receiver 22 may be converted into the HDR image by the controller 21.

The HDR image can represent the wide range of colors with more gray scales, compared to normal images. For this, the camera module 10 may need to photograph an image with a wide range of exposure, and transmit the image in a RAW format of image data. The RAW format of image data can represent gray scales of 14 bits, compared to a JPG format of data that can represent gray scales of 8 bits.

The controller 21 which has received the image from the camera module 10 may correct the received image to create the HDR image, in operation S22, and then, calculate the average brightness of the corresponding image, in operation S23. The average brightness may be obtained by dividing a sum of brightness of individual pixels by the number of the pixels. At this time, representative pixel areas may be selected, and the average of brightness of the representative pixel areas may be decided as the average brightness, in consideration of the amount of calculation. For example, the average brightness of the representative pixel areas may be decided as a value obtained by summing 100 brightness values in the descending order from a highest brightness value with 100 brightness values in the ascending order from a lowest brightness value, and dividing the sum by 200 that is the number of the representative pixel areas.

Then, in operation S24, the controller 21 may compare the calculated average brightness to a reference brightness. The reference brightness is a standard brightness with which the lighting apparatus 30 needs to illuminate a target area for ordinary lighting. If the calculated average brightness is lower than the reference brightness, the streetlight device units 30a to 30n included in the lighting apparatus 30 may be controlled to illuminate brighter, and if the calculated average brightness is higher than the reference brightness, the streetlight device units 30a to 30n may be controlled to illuminate darker or to be turned off.

That is, if it is determined in operation S24 that the calculated average brightness is equal to the reference brightness, operation S25 of maintaining a current control state may be performed. However, the case in which the calculated average brightness is equal to the reference brightness may expand to a case in which the calculated average brightness is within a reference brightness range decided based on the reference brightness.

This is not to perform control operation of dimming the streetlight device units 30a to 30n when the average brightness is close to the reference brightness, in order to avoid too frequent brightness control.

If it is determined in operation S24 that the calculated average brightness is different from the reference brightness or that the average brightness is not within the reference brightness range, the controller 21 may generate a brightness control signal, and transmit the brightness control signal to the transmitter 23, in operation S26.

A dimming controller 32 of the streetlight device units 30a to 30n may receive the brightness control signal transmitted from the transmitter 23 through a receiver 31, and control power of a power supply unit 33 that is to be supplied to a LED light source unit 33 such that the brightness of the area illuminated by the lighting apparatus 30 meets brightness standards.

Then, in operation S27, it is determined whether a set time has elapsed, and if it is determined that the set time has elapsed, the process may return to operation S21.

Accordingly, unlike the conventional method of detecting an ambient brightness, not the brightness of an illuminated area, the present invention can calculate an average brightness of an area illuminated by a plurality of streetlights based on a photographed image of the illuminated area to control a lighting apparatus using the calculated average brightness, thereby accurately controlling a brightness.

Meanwhile, the lighting apparatus 30 may be, for example, one or more streetlights. Also, the one or more streetlight device units 30a to 30n may be, for example, installed in each streetlight of the lighting apparatus 30 in order to control the brightness of the LED light source units 33 of the streetlight device units 30a to 30n according to a brightness control signal from the brightness controller 20.

Also, it will be understood by one of ordinary skill in the art that when the lighting apparatus is a plurality of streetlights installed over a long distance or a plurality of tunnel lightings, the brightness control device can group the plurality of streetlights and/or tunnel lightings to control them.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A brightness control device of a lighting apparatus, comprising:
a camera module configured to acquire an image for brightness control;
a brightness controller configured to receive an image photographed by the camera module to calculate an average brightness of a photographed area, to compare the average brightness to a reference brightness, and to transmit a brightness control signal according to the result of the comparison; and
a lighting device unit installed in the lighting apparatus, and configured to adjust a brightness of a LED light source unit according to the brightness control signal from the brightness controller.

2. The brightness control device of claim 1, wherein the camera module is configured to photograph a digital image, and is a camera already installed on a road.

3. The brightness control device of claim 1 or 2, wherein the brightness controller converts the image photographed by the camera module into a High Dynamic Range (HDR) image to calculate the average brightness.

4. The brightness control device of claim 3, wherein the brightness controller comprises:
an image receiver configured to receive the image photographed by the camera module;
a controller configured to convert the image received by the image receiver into the HDR image, to calculate an average brightness of the HDR image, then to compare the average brightness to a predetermined reference brightness, and to output a brightness control signal according to a difference between the average brightness and the predetermined reference brightness; and
a transmitter configured to transmit the brightness control signal from the controller to the lighting device unit.

5. The brightness control device of claim 4, wherein the average brightness is calculated by dividing a sum of brightness values of pixels included in the HDR image by the number of the pixels, or by dividing a sum of brightness values of representative pixels that are a predetermined number of pixels according to brightness values by the number of the representative pixels.

6. The brightness control device of claim 5, wherein the controller outputs the brightness control signal when the average brightness is different from the reference brightness or when the average brightness is out of a reference brightness range.
